# EUROPÄISCHE PATENTSCHRIFT

(11) **EP 3 093 206 B1**
(45) Veröffentlichungstag und Bekanntmachung des Hinweises auf die Patenterteilung: **27.12.2017**
(21) Anmeldenummer: 16001030.2
(22) Anmeldetag: 06.05.2016
(51) Int. Cl.: B60T 17/02, B60T 17/22, B61C 17/12, F04B 49/06, F04B 51/00

(54) **ZENTRALE ÜBERWACHUNG EINER LUFTVERSORGUNGSANLAGE FÜR SCHIENENFAHRZEUGE**
CENTRAL MONITORING OF AN AIR SUPPLY SYSTEM FOR RAILWAY VEHICLES
SURVEILLANCE CENTRALE D'UNE INSTALLATION D'ALIMENTATION EN AIR POUR VEHICULES SUR RAILS

(30) Priorität: 13.05.2015 DE 102015107552
(43) Veröffentlichungstag der Anmeldung: 16.11.2016
(73) Patentinhaber: KNORR-BREMSE Systeme für Schienenfahrzeuge GmbH, 80809 München (DE)
(72) Erfinder: Assmann, Gert, 80337 München (DE); Centmayer, Sebastian, 81377 München (DE); Riedel, Sebastian, 80803 München (DE)

(56) Entgegenhaltungen:
- EP-A1- 1 479 912
- DE-A1-102013 101 502
- US-A- 5 845 272
- US-A1- 2004 025 082
- US-A1- 2008 219 866
- US-A1- 2009 254 246
- US-A1- 2013 297 163
- US-B1- 6 301 531
- STEFAN-HELMUT LEITNER ET AL: "OPC UA ? Service-oriented Architecture for Industrial Applications", GEMEINSAMER WORKSHOP DER FACHGRUPPEN OBJEKTORIENTIERTE SOFTWAREENTWICKLUNG (OOSE), SOFTWARE-REENGINEERING (SRE) UND SOFTWARE-ARCHITEKTUREN (SW-ARCH) AM 27. OKTOBER 2006 IN LADENBURG, , 27. Oktober 2006 (2006-10-27), XP007909798, Gefunden im Internet: URL:http://pi.informatik.uni-siegen.de/stt /26_4/01_Fachgruppenberichte/ORA2006/01_OR A2006-Bericht.pdf [gefunden am 2009-09-16]
- Aro ET AL: "OPC UA Sessions, Subscriptions and Timeouts | Prosys Blog and Forum", , 26. Januar 2012 (2012-01-26), XP055153741, Gefunden im Internet: URL:http://forum.prosysopc.com/2012/01/26/ jouni/opc-ua-sessions-subscriptions-and-ti meouts/ [gefunden am 2014-11-18]
- GROSMANN DANIEL ET AL: "OPC UA server aggregation - The foundation for an internet of por", PROCEEDINGS OF THE 2014 IEEE EMERGING TECHNOLOGY AND FACTORY AUTOMATION (ETFA), IEEE, 16. September 2014 (2014-09-16), Seiten 1-6, XP032718689, DOI: 10.1109/ETFA.2014.7005354 [gefunden am 2015-01-08]

## Beschreibung

Die vorliegende Erfindung betrifft eine Vorrichtung und ein Verfahren zum Überwachen einer Luftversorgungsanlage in einem Schienenfahrzeug. Die Erfindung betrifft außerdem ein Computerprogramm mit Codemitteln zur Ausführung der Schritte des vorgenannten Verfahrens auf einem Computersystem, und ein computerlesbares Speichermedium, auf dem ein Programmcode mit den Codemitteln des Computerprogramms gespeichert ist.

Gemäß herkömmlichem Stand der Technik erwirbt der Betreiber eine Luftversorgungsanlage bei Anschaffung des Schienenfahrzeuges und verantwortet Betrieb und Wartung. Bisherige Anlagen umfassen bspw. einen Kompressor und einen Lufttrockner und je nach Anlagenprinzip zusätzlich einen Hilfsbetriebeumrichter und einen Elektromotor bei elektrischem Antrieb, eine hydraulische Kupplung und einen Hydraulikmotor bei hydraulischem Antrieb, eine mechanische Flanschanbindung bei direktem Antrieb durch einen Dieselmotor des Fahrzeuges, bzw. eine mechanische Kupplung, ein Getriebe, einen Riemenantrieb o.ä. bei Antrieb durch einen Motor des Fahrzeuges.

So zeigt bspw. die DE 10 2013 101 502 A1 eine Luftversorgungsanlage mit elektronischem Umrichter, wobei ein von einem Motor angetriebener Kompressor zur Erzeugung von Druckluft, ein elektronischer Umrichter zur bedarfsabhängigen Kompressorsteuerung, und mehrere analoge und/oder digitale Sensoren zur Generierung von elektrischen Messsignalen vorgesehen sind. Die elektrischen Messsignale sind zur Steuerung des elektrischen Umrichters und zur Überwachung und Steuerung des Kompressors nutzbar, wobei in dem elektronischen Umrichter eine Verarbeitung der von den Sensoren generierten Messsignale zu Bussignalen erfolgt, welche zur Auswertung an einer Busschnittstelle bereitstellbar sind. Dadurch können gesonderte Steuergeräte zur elektronischen Überwachung des Kompressors und des Motors eingespart und eine Möglichkeit geschaffen werden, Diagnosesignale der Kompressorsteuerung intelligent mit anderen Diagnose- und Steuersignalen des Umrichters zu koppeln, weiterzuverarbeiten und vorteilhafte Betriebszustände durch Kommunikation unter den Steuergeräten des Schienenfahrzeugs für den Kompressor und/oder die Luftversorgungsanlage bereitzustellen.

Herkömmliche Anlagen besitzen jedoch keine Einrichtungen die aufgenommene Leistung (z.B. Strom) bzw. die abgegebene Leistung (z.B. getrocknete Luft) zu messen. Technische Merkmale, wie z.B. Verschleiß, werden in herkömmlichen Luftversorgungsanlagen nur im Rahmen von Wartungs- und Überholungsmaßnahmen bzw. bei Störungen erfasst.

Somit hat im Betrieb weder der Systemhersteller noch der Fahrzeugbauer oder -betreiber Transparenz über das Betriebsverhalten, den Zustand und die technische Verfügbarkeit der Luftversorgungsanlage. Dies verhindert, dass der Betrieb, die Leistung und die Zuverlässigkeit der Anlagen durch den Hersteller überwacht werden kann und Maßnahmen zur Optimierung des Betriebes oder zur Beseitigung von Störungen vorgenommen werden können.

Die Wartung der Anlagen wird in vordefinierten Zyklen und nicht nach Bedarf vorgenommen, da die Hersteller die notwendigen Zeitpunkte für Wartungsarbeiten nicht erkennen können und auch wenig Erfahrung vom Wartungsbedarf haben. Weiterhin fehlen diese Informationen über das Betriebsverhalten bei der Entwicklung neuer und optimierter Anlagen.

US 2013/297163 A1 offenbart eine Vorrichtung und ein Verfahren zur Überwachung einer Luftversorgungsanlage eines Schienenfahrzeugs gemäß den Oberbegriffen der Ansprüche 1 bzw. 8.

US 2008/219866 A1 offenbart eine Vorrichtung und ein Verfahren zum Erzeugen und Steuern eines Luftdurchsatzes.

Der vorliegenden Erfindung liegt daher die Aufgabe zugrunde, eine verbesserte Transparenz über das Betriebsverhalten, den Zustand und die technische Verfügbarkeit der Luftversorgungsanlagen von Schienenfahrzeugen bereitzustellen.

Diese Aufgabe wird durch die Merkmale der unabhängigen Ansprüche gelöst.

Weitere vorteilhafte Ausgestaltungen und Weiterbildungen der Erfindung ergeben sich aus den abhängigen Ansprüchen.

Im Rahmen dieser Beschreibung kann ein Schienenfahrzeug zum Betrieb auf einer Schiene vorgesehen sein. Das Schienenfahrzeug kann einen oder mehrere Wagen und/oder Zugfahrzeuge aufweisen. Ein Wagen eines Schienenfahrzeugs kann ein Triebwagen sein, der über einen eigenen Antrieb verfügt. Eine Steuereinrichtung zur Steuerung einer Bremsanlage des Schienenfahrzeugs kann als Software, Hardware oder Kombination aus Software und Hardware implementiert sein. Die Steuereinrichtung kann als ein oder mehrere Module und/oder Prozesse und/oder Objekte und/oder Threads implementiert sein. Eine Bremsanlage eines Schienenfahrzeugs kann allgemein mehrere Bremsen aufweisen, die nach unterschiedlichen Prinzipien arbeiten. Solche Bremsen können beispielsweise Reibungsbremsen, dynamische Bremsen, Schienenbremsen oder sonstige Bremsen wie beispielsweise aerodynamische Bremsen sein. Erfindungsgemäß wird die Luftversorgungsanlage eines Schienenfahrzeugs somit mittels einer Vorrichtung mit den Merkmalen des Anspruchs 1 überwacht.
Die Erfindung betrifft außerdem ein Überwachungssystem mit den Merkmalen des Anspruchs 4 und ein System mit den Merkmalen des Anspruchs 7.

Die Erfindung betrifft des Weiteren ein Verfahren mit den Merkmalen des Anspruchs 8

Ferner betrifft die Erfindung ein computerlesbares Speichermedium mit den Merkmalen des Anspruchs 11.

Des Weiteren betrifft die Erfindung ein Computerprogramm mit Codemitteln gemäß Anspruch 12.

Dementsprechend wird eine Luftversorgungsanlage bereitgestellt, die technische Möglichkeiten bietet, die abgegebene bzw. aufgenommene Leistung automatisch zu messen, daraus gewonnene Daten über eine intelligente Schnittstelle einer stationären Auswertungseinheit automatisch zu übermitteln, daraus automatisch den Zustand und die Verfügbarkeit abzuleiten, bedarfsspezifisch automatisch die von der Anlage abgegebene Leistung zu berechnen und automatisch Wartungs-und Überholungsintervalle einzuleiten bzw. Optimierungspotenziale für den Betrieb zu ermitteln.

Die vorgeschlagenen lösungsgemäßen Maßnahmen ermöglichen eine kontinuierliche Überwachung des Betriebszustandes und der Zuverlässigkeit der Luftversorgungsanlage, so dass ein möglichst störungsfreier Betrieb der Luftversorgungsanlage und eine frühzeitige Erfassung eines möglichen Wartungsbedarfs bzw. eine Vermeidung unnötiger Wartungsmaßnahmen erzielbar sind.

Ferner kann das Betriebsverhalten für den spezifischen Einsatzfall im jeweiligen Fahrzeug erfasst und optimiert und zur frühzeitigen Erkennung von Qualitätsproblemen herangezogen werden. Dies kann auch zur Erkennung aktueller und künftiger Systemanforderungen zur Ableitung von auf den Einsatzfall besser abgestimmter Entwicklungen und Innovationen dienen.

Die Vorrichtung ist dazu ausgestaltet, die von der Luftversorgungsanlage aufgenommene Leistung oder Energie aus einer einem Motor zum Antrieb eines Kompressors zugeführten elektrischen Energie zu ermitteln.

Ferner ist die Vorrichtung dazu ausgestaltet, die von der Luftversorgungsanlage abgegebene Leistung oder Energie aus einem von dem Kompressor oder einem dem Kompressor nachgeschalteten Lufttrockner abgegebenen Luftstrom zu ermitteln.

Gemäß einer vorteilhaften Weiterbildung kann die Vorrichtung ausgestaltet sein, anhand der empfangenen Messdaten von einem Betriebsstundenzähler eine tatsächliche Betriebsbereitschaftsdauer der Luftversorgungsanlage zu ermitteln.

Gemäß einer weiteren vorteilhaften Weiterbildung kann die Vorrichtung eine zusätzliche Datenschnittstelle zu einer Fahrzeugsteuerung des Schienenfahrzeugs aufweisen und ausgestaltet sein, fahrzeugspezifische Daten des Schienenfahrzeugs auszulesen und über die Kommunikationsschnittstelle bereitzustellen.

Vorzugsweise kann die Vielzahl von Messgeräten einen elektrischen Energiezähler und ein Drehzahlmessgerät für einen Motor der Luftversorgungsanlage, und eine Gasuhr oder ein Gas-Anemometer für einen Kompressor oder einen Lufttrockner der Luftversorgungsanlage umfassen. Darüber hinaus kann die Vielzahl von Messgeräten vorzugsweise einen Betriebsstundenzähler für den Kompressor umfassen.

Vorzugsweise kann der Schritt des Übertragens der Information zu der stationären Auswertungseinheit im Ansprechen auf das Erfassen eines Triggersignals erfolgen.

Die Erfindung wird nachfolgend anhand von Ausführungsbeispielen unter Bezugnahme auf die beigefügten Zeichnungsfiguren näher erläutert. Es zeigen:
Fig. 1 ein schematisches Blockschaltbild eines Überwachungssystems für eine Luftversorgungsanlage mit elektrisch betriebenem Kompressor, gemäß einem ersten Ausführungsbeispiel;
Fig. 2 ein schematisches Blockschaltbild eines Überwachungssystems für eine Luftversorgungsanlage mit hydraulisch betriebenem Kompressor, gemäß einem zweiten Ausführungsbeispiel;
Fig. 3 ein schematisches Blockschaltbild eines Überwachungssystems für eine Luftversorgungsanlage mit einem Kompressor mit Dieselantrieb, gemäß einem dritten Ausführungsbeispiel; und
Fig. 4 ein Flussdiagramm eines Überwachungsverfahrens gemäß einem vierten Ausführungsbeispiel.

Es folgt eine Beschreibung vorteilhafter Ausführungsbeispiele zur Überwachung und Optimierung beispielhafter Luftversorgungsanlagen für Schienenfahrzeuge, die zur Erzeugung von Druckluft für dynamische Bremseinrichtungen und Reibungsbremseinrichtungen eingesetzt werden.

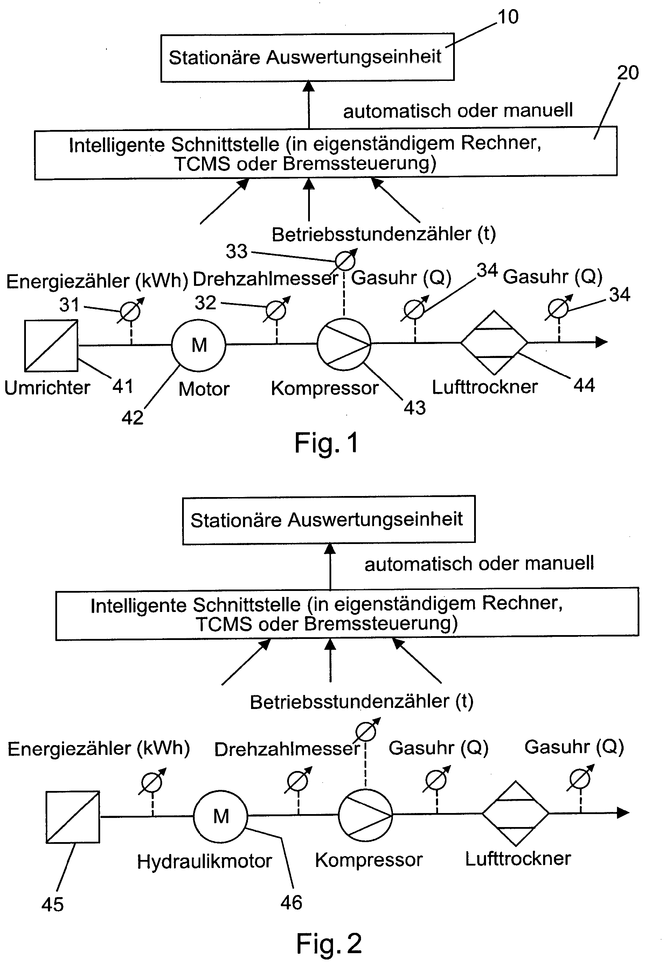

Fig. 1 zeigt ein schematisches Blockschaltbild eines Überwachungssystems für eine Luftversorgungsanlage gemäß einem ersten Ausführungsbeispiel mit einem Kompressor 43, der mittels eines Elektromotors 42 angetrieben wird.

Dem Kompressor 43 ist ein nachgeschalteter Lufttrockner 44 zum Entfeuchten der erzeugten Druckluft zugeordnet. Der Elektromotor 42 kann bspw. ein Drehstrommotor und der Kompressor 43 bspw. ein einstufiger Schraubenkompressor sein. Die Lufttrockneranlage 44 kann bspw. nach dem Adsorptionstrocknungsprinzip arbeiten. Der Elektromotor 42 und der Kompressor 43 können bspw. innerhalb einer metallischen Kapsel (nicht gezeigt) angeordnet sein. Der vorgeschaltete elektronische Umrichter 45 sorgt als Eingangsumrichter (Hilfsbetriebeumrichter) für die Anpassung der Eingangsspannung an die Erfordernisse des Elektromotors 42. Ein Energiezähler 31 dient zur Messung der elektrischen Energiezufuhr zum Elektromotor 42, ein Drehzahlmesser 32 dient zur Messung der Drehzahl des Elektromotors 42, und ein Betriebsstundenzähler 33 dient zur Messung der Betriebsstunden des Kompressors 43. Ferner ist eine Gasuhr 34 zur Messung des Luftverbrauchs auf der Eingangsseite und/oder der Ausgangsseite des Lufttrockners 44 vorgesehen. Der elektrische Energiezähler 31 kann vor dem Umrichter 41 oder zwischen dem Umrichter 41 und dem Elektromotor 42 angeordnet sein. Die Gasuhr 34 bzw. ein Gas-Anemometer kann nach dem Kompressor 43 und/oder nach dem Lufttrockner 44 angeordnet sein. Ferner kann das Drehzahlmessgerät 32 an einer Welle zwischen Elektromotor 42 und Kompressor 43 angebracht sein.

Die von den vorgenannten Messgeräten 31-34 gewonnenen Messdaten werden über eine durch eine intelligente Schnittstelle 20 bereitgestellte interne Schnittstelle gesammelt und aufbereitet und dann entweder automatisch oder manuell über eine durch die intelligente Schnittstelle 20 bereitgestellte Kommunikationsschnittstelle an eine nicht im Schienenfahrzeug angeordnete, stationäre Auswertungseinheit 10 übermittelt.

Unter einer "intelligenten Schnittstelle" soll dabei eine softwaregesteuerte Prozessorumgebung verstanden werden, die zur Steuerung der Überwachung des Luftversorgungssystems dient. Insbesondere kann sie ausgestaltet sein, neben der Gewinnung und Übermittlung von leistungsbezogenen Daten auch automatische Berichte über auftretende Fehler oder Unregelmäßigkeiten zu erzeugen.

Die intelligente Schnittstelle kann dabei in einer eigenständigen Rechnereinheit oder auch im Rechner einer nicht gezeigten Fahrzeugsteuerung (z.B. dem Train Control and Management System (TCMS)) oder im Bremssteuerungsrechner implementiert sein.

Ferner kann die intelligente Schnittstelle 20 zusätzlich eine Datenschnittstelle zu einer Fahrzeugsteuerung (TCMS) aufweisen, um automatisch Fahrzeugdaten (z.B. Identifikationsmerkmale etc.) auszulesen, wodurch eine fahrzeugspezifische Auswertung der gewonnenen Messdaten an der stationären Auswertungseinheit 10 möglich ist. Alternativ können dem Fahrzeugrechner auch Daten aus der intelligenten Schnittstelle 20 zur Verfügung gestellt werden.

Die Datenübermittlung über die Kommunikationsschnittstelle zur entfernten stationären Auswertungseinheit 10 kann bspw. drahtlos oder leitungsgebunden (per Oberleitung oder Schienensystem) über eine serielle Verbindung oder ein lokales oder öffentliches Netzwerk erfolgen. Dabei können Fehlermeldungen bspw. unter Verwendung des Simple Network Management Protocol (SNMP) gesendet werden.

Die intelligente Schnittstelle 20 kann optional auch unabhängig von einem im Luftversorgungssystem verwendeten Betriebssystem arbeiten und die Überwachung damit auch ohne installiertes oder laufendes Betriebssystem ermöglichen. Des Weiteren kann die intelligente Schnittstelle 20 einen zentralen Controller aufweisen, an den weitere, dezentrale Controller für spezielle Zwecke, etwa die Überwachung spezieller Sensoren oder Funktionen des Luftversorgungssystems, angeschlossen werden können. Die Verbindung zwischen dem zentralen Controller und den dezentralen Controllern kann über ein Bussystem erfolgen, wie bspw. den sogenannten Intelligent Platform Management Bus (IPMB).

Bei dem bereits vorhandenen Betriebsstundenzähler 33 kann durch technische Hilfsmittel sichergestellt sein, dass eine zuverlässige und nicht manipulierbare Messdatenerfassung erfolgt und die Messdaten in nachstehender Weise datentechnisch verarbeitet und übermittelt werden können. Neben der Erfassung der tatsächlichen Betriebsstunden, kann auch die Zeitdauer erfasst werden, während der die Luftversorgungsanlage prinzipiell betriebsbereit zur Verfügung steht. Die Ermittlung dieser Zeitdauer kann auf technischem Wege (z.B. durch entsprechende Softwaresteuerung) in der intelligenten Schnittstelle 20 erfolgen.

Fig. 2 zeigt ein schematisches Blockschaltbild eines alternativen Überwachungssystems für eine Luftversorgungsanlage gemäß einem zweiten Ausführungsbeispiel bei hydraulischem Antrieb des Kompressors 43 mittels eines Hydraulikmotors 46 und einer hydraulische Kupplung. Der Hydraulikmotor 46 wird dabei über eine geeignete elektrische Energieversorgung 45 gespeist. Ansonsten entsprechen die Komponenten des Blockschaltbilds in Fig. 2 denen des Blockschaltbilds aus Fig. 1, so dass auf eine erneute Beschreibung hier verzichtet werden kann.

Im Falle eines hydraulischen Antriebes gemäß dem zweiten Ausführungsbeispiel oder im Falle einer mechanischen Kopplung an einen Fahrzeugmotor mittels Getriebe, Riemenantrieb, Kupplung, Flanschanbindung oder ähnlichem kann alternativ auch die Drehzahl des Kompressors 43 mit einem Drehzahlmesser gemessen werden.

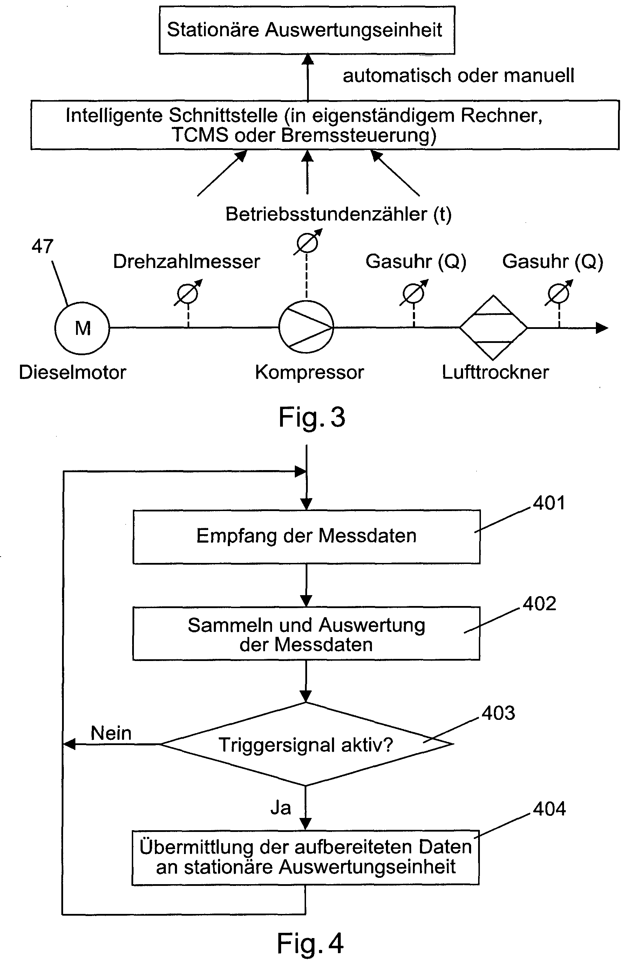

Fig. 3 zeigt ein schematisches Blockschaltbild eines weiteren alternativen Überwachungssystems für eine Luftversorgungsanlage gemäß einem dritten Ausführungsbeispiel mit direktem Antrieb des Kompressors 43 durch einen Dieselmotor 47 des Fahrzeugs mittels Flanschanbindung. Auch hier entsprechen die Komponenten des Blockschaltbilds in Fig. 3 denen des Blockschaltbilds aus Fig. 1, so dass auf eine erneute Beschreibung wiederum verzichtet werden kann.

Bei den vorstehend beschriebenen ersten bis dritten Ausführungsbeispielen können die gewonnen Überwachungsdaten auch von der intelligenten Schnittstelle 20 über die Kommunikationsschnittstelle online übertragen (z.B. über eine standardisierte OPC-Schnittstellenarchitektur) oder zunächst in einem Datenlogger digital gespeichert werden.

Bei der OPC Unified Architecture (OPC UA) handelt es sich um ein zur Maschine-Maschine-Kommunikation eingesetztes Kommunikationsprotokoll. Als neueste aller OPC-Spezifikationen unterscheidet sich OPC UA erheblich von seinen Vorgängern, insbesondere durch die Fähigkeit, Maschinendaten (Prozesswerte, Messwerte, Parameter usw.) nicht nur zu transportieren, sondern auch maschinenlesbar semantisch zu beschreiben. Das OPC-Informationsmodell ist ein sogenanntes Full-Mesh-Network aus Knoten (sogenannte "Nodes"), mit dem neben den Nutzdaten eines Knoten auch Meta- und Diagnoseinformationen repräsentiert werden. Ein Knoten ähnelt dabei einem Objekt aus der objektorientierten Programmierung. Weiterhin werden Events unterstützt, die versendet werden können, um bestimmte Informationen zwischen Geräten auszutauschen.

Der Datenlogger besteht aus einem programmierbaren Mikroprozessor, einem Speichermedium, mindestens einer Schnittstelle und ein oder mehreren Kanälen zum Anschluss der Datenquelle wie z.B. die Messgeräte 31-34. Die Messdaten werden von dem jeweiligen Messgerät oder Sensor direkt über eine interne Schnittstelle an den Datenlogger weitergegeben und abgelegt. Bei der internen Schnittstelle kann es sich um eine Schnittstelle gemäß dem Standard RS232, CAN oder USB handeln. Der Speicherzyklus für den Datenlogger kann von der konkreten Verwendung abhängig sein. Der Speichervorgang kann dabei in genauen zeitlichen Abständen erfolgen oder jeweils im Moment der Datenerzeugung.

Über entsprechende, die Kommunikationsschnittstelle bildende industrielle Schnittstellen und/oder Softwaretools können die Daten dann von der intelligenten Schnittstelle 20 direkt zu der stationären Auswertungseinheit 10 übertragen werden. Dort können die eingegangenen Daten und/oder Meldungen der intelligenten Schnittstelle 20 direkt verwendet werden, um z.B. online den aktuellen Zustand der Luftversorgungsanlage anzuzeigen.

Fig. 4 zeigt ein Flussdiagramm eines Überwachungsverfahrens gemäß einem vierten Ausführungsbeispiel, das beispielsweise als Software in der intelligenten Schnittstelle 20 implementiert werden kann.

Nach dem Programmstart werden im Schritt 401 zunächst die Messdaten von den Messgeräten 31-34 bspw. gemäß den Vorgaben des verwendeten Messschnittstellenprotokolls der internen Schnittstelle empfangen. Danach werden die empfangenen Messdaten im Schritt 402 gesammelt und ausgewertet. Nun wird im Schritt 403 solange gewartet, bis ein manuell oder automatisch aktiviertes Triggersignal erfasst wird. Das Triggersignal kann bspw. durch die externe stationäre Auswertungseinheit 10 oder die Luftversorgungsanlage oder eine andere Steuereinrichtung des Schienenfahrzeugs in vorbestimmten Zeitintervallen oder durch im Ansprechen auf ein vorbestimmtes Ereignis ausgelöst werden. Solange kein aktives Triggersignal festgestellt wird, kehrt der Ablauf zurück zum Schritt 401, empfängt weitere Messdaten im Schritt 401 und wertet diese im Schritt 402 aus. Sobald jedoch im Schritt 403 ein aktives Triggersignal erkannt wird, so schreitet der Ablauf zum Schritt 404 und die seit der letzten Übertragung aufbereiteten Daten werden über die Kommunikationsstelle zu der stationären Auswertungseinheit 10 übertragen, wo sie dann für Überwachungs-, Optimierungs- und/oder Wartungszwecke odgl. verwendet werden.

Zusammenfassend wurde eine Vorrichtung und ein Verfahren zum Überwachen einer Luftversorgungsanlage eines Schienenfahrzeugs beschrieben, wobei leistungsabhängige Messwerte der Luftversorgungsanlage von einer Vielzahl von Messgeräten 31-34 empfangen und zum Ermitteln einer Information über eine von der Luftversorgungsanlage aufgenommenen bzw. abgegebenen Leistung oder Energie ausgewertet werden. Schließlich wird die gewonnen Information von dem Schienenfahrzeug zu einer stationären Auswertungseinheit 10 übertragen und dort zur Ableitung einer Wartungs- oder Optimierungsinformation für die Luftversorgungsanlage herangezogen.

Es wird angemerkt, dass bei den vorstehend beschriebenen Ausführungsbeispielen zusätzliche Parameter und/oder Messgrößen für die Überwachung der Luftversorgungsanlage herangezogen werden können.

Wie bereits erwähnt, kann die Überwachung mittels der intelligenten Schnittstelle 10 durch eine programmgesteuerte Computereinrichtung realisiert sein, bei der die Schritte der Fig. 4 und auch die Gewinnung, Auswertung und Übertragung der Mess- bzw. Auswertungsergebnisdaten mittels eines Computerprogramms gesteuert werden, das beispielsweise auf einem computerlesbaren Speichermedium gespeichert ist oder über ein Netzwerk wie beispielsweise das Internet oder ein lokales Netz herunterladbar ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Vorrichtung (20) zur Überwachung einer Luftversorgungsanlage (41; 45; 47, 42; 46, 43, 44) eines Schienenfahrzeugs, wobei die Vorrichtung (20) umfasst:
- eine interne Schnittstelle zum Empfangen von leistungsabhängigen Messdaten der Luftversorgungsanlage von einer Vielzahl von Messgeräten (31-34);
- eine Auswertungseinrichtung (402) zum Auswerten der empfangenen Messdaten und zum Ermitteln einer Information über eine von der Luftversorgungsanlage aufgenommene bzw. abgegebene Leistung oder Energie; und
- eine Kommunikationsschnittstelle zum Übertragen der Information von dem Schienenfahrzeug zu einer stationären Auswertungseinheit (10),
**dadurch gekennzeichnet, dass**
die Vorrichtung (20) die von der Luftversorgungsanlage aufgenommene Leistung oder Energie aus einer einem Motor (42; 46; 47) zum Antrieb eines Kompressors (43) zugeführten elektrischen Energie ermittelt; und
die Vorrichtung (20) die von der Luftversorgungsanlage abgegebene Leistung oder Energie aus einem von dem Kompressor (43) oder einem dem Kompressor (43) nachgeschalteten Lufttrockner (44) abgegebenen Luftstrom ermittelt.

2. Vorrichtung nach Anspruch 1, wobei
die Vorrichtung (20) ausgestaltet ist, anhand empfangener Messdaten von einem Betriebsstundenzähler (33) eine tatsächliche Betriebsbereitschaftsdauer der Luftversorgungsanlage zu ermitteln.

3. Vorrichtung nach einem der vorhergehenden Ansprüche, wobei
die Vorrichtung (20) eine zusätzliche Datenschnittstelle zu einer Fahrzeugsteuerung des Schienenfahrzeugs aufweist und ausgestaltet ist, fahrzeugspezifische Daten des Schienenfahrzeugs auszulesen und über die Kommunikationsschnittstelle bereitzustellen.

4. Überwachungssystem zur Überwachung einer Luftversorgungsanlage eines Schienenfahrzeugs, wobei das Überwachungssystem eine Vorrichtung (20) nach einem der Ansprüche 1 bis 3 aufweist und eine Vielzahl von Messgeräten (31-34) zur Gewinnung der leistungsabhängigen Messdaten.

5. Überwachungssystem nach Anspruch 4, wobei die Vielzahl von Messgeräten einen elektrischen Energiezähler (31) und ein Drehzahlmessgerät (32) für einen Motor (42) der Luftversorgungsanlage, und eine Gasuhr (34) für einen Kompressor (43) oder einen Lufttrockner (44) der Luftversorgungsanlage umfasst.

6. Überwachungssystem nach Anspruch 5, wobei die Vielzahl von Messgeräten einen Betriebsstundenzähler (33) für den Kompressor (43) umfasst.

7. System bestehend aus einer stationäre Vorrichtung (10) zur Überwachung einer Luftversorgungsanlage eines Schienenfahrzeugs und dem Überwachungssystem nach einem der Ansprüche 4 bis 6, wobei die stationäre Vorrichtung (10) umfasst:
- eine Einrichtung zum Empfangen einer Information über die von der Luftversorgungsanlage aufgenommene bzw. abgegebene Leistung oder Energie von der Kommunikationsschnittstelle des Schienenfahrzeugs; und
- eine Auswertungseinrichtung zum Auswerten der empfangenen Information und zum Ableiten einer Wartungs- oder Optimierungsinformation für die Luftversorgungsanlage.

8. Verfahren zum Überwachen einer Luftversorgungsanlage eines Schienenfahrzeugs, mit den Schritten:
- Empfangen von leistungsabhängigen Messwerten der Luftversorgungsanlage von einer Vielzahl von Messgeräten (31-34);
- Auswerten der empfangenen Messwerte und zum Ermitteln einer Information über eine von der Luftversorgungsanlage aufgenommene bzw. abgegebene Leistung oder Energie; und
- Übertragen der Information von dem Schienenfahrzeug zu einer stationären Auswertungseinheit (10),
**gekennzeichnet durch**
Ermitteln einer von der Luftversorgungsanlage aufgenommenen Leistung oder Energie aus einer einem Motor (42; 46; 47) zum Antrieb eines Kompressors (43) zugeführten elektrischen Energie; und
Ermitteln einer von der Luftversorgungsanlage abgegebenen Leistung oder Energie aus einem von dem Kompressor (43) oder einem dem Kompressor (43) nachgeschalteten Lufttrockner (44) abgegebenen Luftstrom.

9. Verfahren nach Anspruch 8, wobei der Schritt des Übertragens der Information im Ansprechen auf das Erfassen eines Triggersignals erfolgt.

10. Verfahren nach Anspruch 8 oder 9, des Weiteren umfassend die weiteren Schritte des Auswertens der übertragenen Information in der stationären Auswertungseinheit (10) und des Ableitens einer Wartungs- oder Optimierungsinformation für die Luftversorgungsanlage aus der ausgewerteten, übertragenen Information.

11. Computerlesbares Speichermedium, auf dem ein auf einem Computersystem ausführbarer Programmcode gespeichert ist, der bei seiner Ausführung die Schritte eines der Verfahrensansprüche 8 bis 10 erzeugt.

12. Computerprogramm mit Codemitteln, die bei ihrer Ausführung auf einem Computersystem die Schritte eines der Verfahrensansprüche 8 bis 10 erzeugen.

## Claims

1. Device (20) for monitoring an air supply system (41; 45; 47, 42; 46, 43, 44) of a rail vehicle, the device (20) comprising:
- an internal interface for receiving power-dependent measurement data of the air supply system from a plurality of measuring devices (31-34);
- an evaluation device (402) for evaluating the received measurement data and for acquiring information on a power or energy absorbed or emitted by the air supply system; and
- a communication interface for transmitting the information from the rail vehicle to a stationary evaluation unit (10),
**characterised in that**
the device (20) determines the power or energy absorbed by the air supply system from an electric energy supplied to a motor (42; 46; 47) for driving a compressor (43); and
the device (20) determines the power or energy emitted by the air supply system from an air flow emitted by the compressor (43) or by an air drier (44) located downstream of the compressor (43).

2. Device according to claim 1, wherein
the device (20) is designed to determine an actual availability duration of the air supply system from measurement data received from an operating hour meter (33).

3. Device according to any of the preceding claims, wherein
the device (20) comprises an additional data interface for a vehicle control of the rail vehicle and is designed to read out vehicle-specific data of the rail vehicle and make them available via the communication interface.

4. Monitoring system for monitoring an air supply system of a rail vehicle, wherein the monitoring system comprises a device (20) according to any of claims 1 to 3 and a plurality of measuring devices (31-34) for acquiring the power-dependent measurement data.

5. Monitoring system according to claim 4, wherein the plurality of measuring devices comprises an electric energy meter (31), a tachometer (32) for a motor (42) of the air supply system and a gas meter (34) for a compressor (43) or an air drier (44) of the air supply system.

6. Monitoring system according to claim 5, wherein the plurality of measuring devices comprises an operating hour meter (33) for the compressor (43).

7. System consisting of a stationary device (10) for monitoring an air supply system of a rail vehicle and of the monitoring system according to any of claims 4 to 6, wherein the stationary device (10) comprises:
- a device for acquiring information on a power or energy absorbed or emitted by the air supply system from the communication interface of the rail vehicle; and
- an evaluation device for evaluating the received information and for deriving a maintenance or optimisation information for the air supply system.

8. Method for monitoring an air supply system of a rail vehicle, comprising the steps of:
- the reception of power-dependent measured values of the air supply system from a plurality of measuring devices (31-34);
- the evaluation of the received measured values and the acquisition of information on a power or energy absorbed or emitted by the air supply system; and
- the transmission of the information from the rail vehicle to a stationary evaluation unit (10).
**characterised by**
the determination of a power or energy absorbed by the air supply system from an electric energy supplied to a motor (42; 46; 47) for driving a compressor (43); and
the determination of a power or energy emitted by the air supply system from an air flow emitted by a compressor (43) or by an air drier (44) located downstream of the compressor (43).

9. Method according to claim 8, wherein the step of the transmission of the information is carried out in response to the detection of a trigger signal.

10. Method according to claim 8 or 9, further comprising the steps of the evaluation of the transmitted information in the stationary evaluation unit (10) and the derivation of a maintenance or optimisation information for the air supply system from the evaluated transmitted information.

11. Computer-readable storage medium on which a computer-executable programme code which, when executed, generates the steps of any of the method claims 8 to 10 is stored.

12. Computer programme with code means which, when executed on a computer system, generate the steps of any of the method claims 8 to 10

## Revendications

1. Dispositif (20) de contrôle d'une installation (41; 45; 47, 42; 46, 43, 44) d'alimentation en air d'un véhicule sur rail, le système (20) comprenant :
- une interface interne pour recevoir, d'une pluralité d'appareils (31 à 34) de mesure, des données de mesure, qui dépendent de la puissance, de l'installation d'alimentation en air;
- un dispositif (402) d'exploitation pour exploiter les données de mesure reçues et pour déterminer une information sur une puissance ou une énergie reçue ou cédée par l'installation d'alimentation en air et
- une interface de communication pour transmettre l'information du véhicule sur rail à une unité (10) d'exploitation fixe,
**caractérisé en ce que**
le dispositif (20) détermine la puissance ou l'énergie reçue par l'installation d'alimentation en air, à partir d'une énergie électrique envoyée à un moteur (42; 46; 47) d'entraînement d'un compresseur (43) et
le dispositif (20) détermine la puissance ou l'énergie cédée par l'installation d'alimentation en air, à partir d'un courant d'air donné par le compresseur (43) ou par un sécheur (44) d'air, monté en aval du compresseur (43).

2. Dispositif suivant la revendication 1, dans lequel
le dispositif (20) est conformé pour, à l'aide des données de mesure reçues, déterminer par un compteur (33) d'heures de fonctionnement, une durée réelle de disponibilité de fonctionnement de l'installation d'alimentation en air.

3. Dispositif suivant l'une des revendications précédentes, dans lequel
le dispositif (20) a une interface supplémentaire de données avec une commande du véhicule sur rail et est conformé pour lire des données spécifiques au véhicule du véhicule sur rail et les mettre à disposition par l'interface de communication.

4. Système de contrôle d'une installation d'alimentation en air d'un véhicule sur rail, le système de contrôle ayant un dispositif (20) suivant l'une des revendications 1 à 3 et une pluralité d'appareil (31 à 34) de mesure pour obtenir les données de mesure, qui dépendent de la puissance.

5. Système de contrôle suivant la revendication 4, dans lequel la pluralité d'appareils de mesure comprend un compteur (31) d'énergie électrique et un appareil (32) de mesure du régime d'un moteur (42) de l'installation d'alimentation en air et un compteur (34) de gaz pour un compresseur (43) ou pour un sécheur (44) d'air de l'installation d'alimentation en air.

6. Système de contrôle suivant la revendication 5, dans lequel la pluralité d'appareils de mesure comprend un compteur (33) d'heures de fonctionnement du compresseur (43).

7. Système constitué d'un dispositif (10) fixe de contrôle d'une installation d'alimentation en air d'un véhicule sur rail et le système de contrôle suivant l'une des revendications 4 à 6, le dispositif (10) fixe comprenant :
- un dispositif pour recevoir, par l'interface de communication du véhicule ferroviaire, une information sur la puissance ou l'énergie reçue ou cédée par l'installation d'alimentation en air et
- un dispositif d'exploitation pour exploiter l'information reçue et pour en déduire une information d'entretien ou d'optimisation de l'installation d'alimentation en air.

8. Procédé de contrôle d'une installation d'alimentation en air d'un véhicule sur rail, comprenant les stades :
- réception de valeurs de mesure qui dépendent de la puissance de l'installation d'alimentation en air d'une pluralité d'appareils (31 à 34) de mesure;
- exploitation des valeurs de mesure reçues et détermination d'une information sur la puissance ou l'énergie reçue ou cédée par l'installation d'alimentation en air et
- transmission de l'information du véhicule sur rail à une unité (10) d'exploitation fixe,
**caractérisé par**
la détermination d'une puissance ou d'une énergie reçue par l'installation de l'alimentation en air, à partir d'une énergie électrique envoyée à un moteur (42; 46; 47) d'entraînement d'un compresseur et
la détermination d'une puissance ou d'une énergie reçue par l'installation d'alimentation en air, à partir d'un courant d'air donné par le compresseur (43) ou par un sécheur (44) d'air monté en aval du compresseur (43).

9. Procédé suivant la revendication 8, dans lequel le stade de la transmission de l'information s'effectue en réaction à la détection d'un signal de déclenchement.

10. Procédé suivant la revendication 8 ou 9, comprenant en outre les stades supplémentaires de l'exploitation de l'information transmise dans l'unité (10) de l'exploitation fixe et de la déduction d'une information d'entretien ou d'optimisation de l'installation d'alimentation en air, à partir de l'information transmise et exploitée.

11. Support de mémoire déchiffrable par ordinateur, sur lequel, est mémorisé un code de programme, qui peut être réalisé sur un système d'ordinateur et qui, lors de sa réalisation, produit les stades de l'une des revendications 8 à 10 de procédé.

12. Programme d'ordinateur ayant des moyens de code, qui, lorsqu'ils sont réalisés sur un système d'ordinateur, produisent les stades de l'une des revendications 8 à 10 de procédé.
